(19) Europäisches Patentamt / European Patent Office / Office européen des brevets

(11) **EP 2 005 379 B1**

(12) **FASCICULE DE BREVET EUROPEEN**

(45) Date de publication et mention de la délivrance du brevet:
**29.03.2017 Bulletin 2017/13**

(21) Numéro de dépôt: **07734224.4**

(22) Date de dépôt: **05.04.2007**

(51) Int Cl.:
*G06Q 20/04* (2012.01)   *H04L 29/06* (2006.01)

(86) Numéro de dépôt international:
**PCT/IB2007/000904**

(87) Numéro de publication internationale:
**WO 2007/113669 (11.10.2007 Gazette 2007/41)**

(54) **SÉCURISATION DE TRANSACTION ÉLECTRONIQUES SUR UN RÉSEAU OUVERT**

SYSTEM ZUM SICHERN VON ELEKTRONISCHEN TRANSAKTIONEN ÜBER EIN OFFENES NETZWERK

SYSTEM FOR SECURING ELECTRONIC TRANSACTIONS OVER AN OPEN NETWORK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **05.04.2006 EP 06405145**

(43) Date de publication de la demande:
**24.12.2008 Bulletin 2008/52**

(73) Titulaire: **Elca Informatique S.A.**
**1000 Lausanne 13 (CH)**

(72) Inventeurs:
• **BOST, Jean-Marc**
  **CH-1226 Thônex (CH)**
• **FERRO, Marco**
  **CH-1004 Lausanne (CH)**
• **GOROSTIDI, Daniel**
  **CH-1024 Ecublens (CH)**

(74) Mandataire: **reuteler & cie SA**
**Chemin de la Vuarpillière 29**
**1260 Nyon (CH)**

(56) Documents cités:
EP-A- 1 577 847          WO-A-03/006257
WO-A-2004/063993   WO-A-2007/056808
GB-A- 2 429 094         US-A1- 2002 095 388
US-A1- 2003 055 738   US-A1- 2004 073 813
US-A1- 2004 177 047    US-B1- 6 848 048

• MAO W: "ON TWO PROPOSALS FOR ON-LINE BANKCARD PAYMENTS USING OPEN NETWORKS:PROBLEMS AND SOLUTIONS" PROCEEDINGS IEEE SYMPOSIUM ON SECURITY AND PRIVACY, XX, XX, 6 mai 1996 (1996-05-06), pages 201-210, XP000600082
• BAIRD H S ET AL: "ScatterType: A Legible but Hard-to-Segment CAPTCHA" DOCUMENT ANALYSIS AND RECOGNITION, 2005. PROCEEDINGS. EIGHTH INTERNATIONAL CONFERENCE ON SEOUL, KOREA 31-01 AUG. 2005, PISCATAWAY, NJ, USA,IEEE, 31 août 2005 (2005-08-31), pages 935-939, XP010878153 ISBN: 0-7695-2420-6
• NAOR M ET AL INTERNATIONAL ASSOCIATION FOR CRYPTOLOGIC RESEARCH (EDS GOOS G ET AL: "VISUAL AUTHENTICATION AND IDENTIFICATION" ADVANCES IN CRYPTOLOGY - CRYPTO '97. SANTA BARBARA, AUG. 17 - 21, 1997, PROCEEDINGS OF THE ANNUAL INTERNATIONAL CRYPTOLOGY CONFERENCE (CRYPTO), BERLIN, SPRINGER, DE, vol. CONF. 17, 17 août 1997 (1997-08-17), pages 322-336, XP000767544 ISBN: 3-540-63384-7

## Description

La présente invention concerne un procédé de sécurisation de transactions électroniques effectuées sur un réseau ouvert, notamment un réseau global ouvert, tel qu'Internet.

La plupart des transactions électroniques effectuées par la voie Internet sont sécurisées avec un procédé d'authentification renforcée de l'utilisateur et avec le cryptage des données échangées entre l'utilisateur et le serveur d'un fournisseur, d'une banque ou d'une autre partie à la transaction. Ces moyens ne permettent pas de garantir qu'une transaction, telle qu'un virement bancaire, ne puisse être interceptée et modifiée à la volée par un intermédiaire malveillant ou non autorisé. Une personne malveillante (« hacker ») peut par exemple lire, transformer ou dévier les données échangées entre le poste de l'utilisateur et le serveur du fournisseur, ou un programme malicieux (« malware »), par exemple un « Troyen » déposé par un « cheval de Troie », peut réaliser les mêmes méfaits entre l'interface utilisateur (clavier, écran) et le logiciel navigateur du poste de l'utilisateur.

Les systèmes d'authentification renforcée permettent à un utilisateur de valider la transaction : i.e., de prouver qu'il est bien l'auteur de la demande en fournissant un code à usage unique (qui ne peut pas être réutilisé) pour chaque transaction. Dans certains de ces systèmes, l'utilisateur obtient le code en réponse à un défi envoyé par le serveur du fournisseur, en lisant une carte personnelle à grille ou en manipulant un calculateur personnel. De tels procédés de défi-réponse pour l'authentification d'un utilisateur ou pour la validation d'une transaction sont décrits par exemple dans les publications US 2005 075973, US 2004 059952, EP 1338940, US 2001 044896, US 5060263, GB 2120434 et US 2005 246524.

Les systèmes d'authentification existants ne permettent pas d'assurer la validité d'une transaction si les données échangées entre l'utilisateur et son navigateur sont interceptées et manipulées, et notamment si un cheval de Troie parvient à présenter des données de la transaction au serveur du fournisseur qui sont différentes des données entrées par l'utilisateur et que ce dernier visualise sur son poste. Bien qu'il soit difficile de manipuler les données relatives au système d'authentification, tel que décrit dans US 2005/0075973, si l'on intercepte et manipule les données de la transaction sur le poste de l'utilisateur, on peut présenter des données concernant la transaction à l'utilisateur qui sont différentes aux données présentées au serveur du fournisseur ou de l'autre partie à la transaction, de sorte que l'utilisateur valide une transaction qui est différente de celle qu'il entre dans son système ou qui apparaît sur la confirmation de la transaction.

Pour protéger efficacement les transactions, il est avantageux d'utiliser un système de signature de transaction qui lie définitivement le code à usage unique aux détails de la transaction de manière à ôter toute possibilité à un intermédiaire ou à un Troyen d'utiliser ce code pour une autre transaction. De telles solutions sont décrites dans US 2002/0198848 et US 2002/0080183. Pour lier les détails de la transaction au code à usage unique, ces solutions fournissent à l'utilisateur un équipement lui permettant de générer le code à usage unique à partir des données de la transaction selon l'un ou l'autre des deux procédés suivants : soit un logiciel spécial récupère les données de la transaction depuis le navigateur de l'utilisateur, soit l'utilisateur saisit à nouveau les détails de la transaction dans un calculateur logiciel ou matériel indépendant. La première solution ne protège toujours pas contre l'interception et l'altération des détails de la transaction dans le navigateur avant la récupération par le logiciel spécial. Les calculateurs seuls sont résistants à de tels chevaux de Troie du moins tant qu'ils restent totalement indépendants du navigateur, i.e. tant que l'utilisateur saisit à nouveau intégralement les détails de la transaction dans le calculateur.

Les calculateurs déplorent cependant un certain nombre d'inconvénients qui les rendent peu compatibles avec une utilisation sur un réseau ouvert comme Internet. Les logiciels compliquent sérieusement le déploiement, ne sont accessibles que sur le poste où ils sont installés et sont sensibles aux attaques du poste de l'utilisateur. Les calculateurs matériels sont onéreux, sont peu pratiques à transporter sur soi et sont peu flexibles en cas de modification des détails de la transaction. Tous les calculateurs sont fastidieux pour l'utilisateur qui doit saisir deux fois les détails de la transaction sous peine d'être vulnérables aux Troyens autrement. Ils sont inadaptés pour des transactions compliquées ou multiples.

Dans la demande US 2003/055738, l'on décrit un système pour signer une transaction électronique utilisant un équipement mobile électronique, comme un téléphone portable.

Le mobile peut être utilisé comme un calculateur avec les désavantages décrits ci-dessus pour la sécurisation des transactions électroniques ou, alternativement, il peut être utilisé comme un équipement connecté au système de la banque par un canal séparé du canal Internet, comme le SMS. Les données de la transaction ainsi que le défi peuvent être envoyés directement sur le mobile sans risque d'être interceptées par un Troyen qui ne peut pas contrôler deux postes différents pour les échanges par Internet et SMS. A noter qu'il existe aussi des réalisations plus légères qui tirent partie d'un deuxième canal, comme le SMS, pour envoyer directement le code à usage unique en lieu et place du défi.

Un Troyen reste toutefois une menace si l'équipement mobile est utilisé comme poste unique, à la fois pour les échanges par Internet et pour les SMS. Bien que l'on propose d'intégrer des données de la transaction dans un reçu de la transaction envoyé à l'utilisateur, le procédé selon US 2003/055738 ne permet toujours pas d'éviter une manipulation des données entre le dispositif électronique et l'utilisateur. Un Troyen déployé sur l'ordinateur ou le téléphone portable de l'utilisateur pourrait manipuler les informations sur le poste de l'utilisateur de sorte que ce qu'il voit sur son écran ne correspond pas aux données (cryptées) effectivement transmises. Ce système est donc toujours soumis au risque qu'un programme malveillant installé sur le poste de l'utilisateur manipule les données de la transaction saisie sur le poste de l'utilisateur avant qu'elles soient cryptées et ensuite manipule les données reçues en retour après décryptage. De plus, l'usage d'un canal comme le SMS est onéreux et n'offre pas toutes les garanties de disponibilité. Un équipement mobile comme un téléphone portable est onéreux, souvent renouvelé et il est limité par rapport à l'utilisation d'un ordinateur connecté à un réseau ouvert tel que l'Internet pour la saisie, l'affichage, le stockage et l'impression des données d'une transaction.

Le document intercalaire britannique GB 2429094 décrit la génération d'un reçu sécurisé incluant un contrôle d'intégrité visuel comprenant l'intégration d'un défi personnel et de données de transaction.

Par ailleurs, les équipements de signature électronique de type calculateur ou téléphone mobile arrivent alors que les systèmes d'authentification sont déjà largement répandus, notamment, pour les opérations de banque à distance. Les parties qui ont investis dans ces technologies, quelquefois très coûteuses et complexes à distribuer, ne souhaitent pas les remplacer de si tôt par de nouvelles technologies.

Au vu de ce qui précède, un but de l'invention est de fournir un procédé de sécurisation de transactions électroniques sur un réseau ouvert, tel qu'Internet, qui permet de garantir l'authenticité et l'intégrité d'une transaction sans nécessiter d'opérations fastidieuses tout en offrant à l'utilisateur mobilité et simplicité, et au fournisseur flexibilité et faibles coûts.

En particulier, il est avantageux de fournir un procédé de sécurisation de transactions électroniques permettant l'exécution des transactions par un utilisateur à partir d'un simple poste utilisateur, connecté à un seul réseau ouvert, sans configuration spécifique de ce poste, notamment pour permettre l'exécution de transactions sur la majorité des postes depuis n'importe quel endroit.

Il est avantageux d'assurer l'authenticité et l'intégrité de transactions en ligne à partir de postes qui ne sont pas nécessairement bien sécurisés et qui pourraient par exemple contenir des programmes malicieux, comme des Troyens, manipulant les données entre les interfaces utilisateur tels que l'écran et le clavier du poste et le programme navigateur de réseau.

L'invention vise également à fournir un procédé de securisation de transaction électronique sur un réseau ouvert, générant un reçu qui soit utilisable comme preuve non-répudiable de la transaction.

En particulier, il est avantageux de fournir un procédé de securisation de transaction électronique sur un réseau ouvert, générant un reçu qui soit utilisable comme preuve non-répudiable de la transaction, ledit procédé ne devant pas nécessiter de l'utilisateur qu'il possède un équipement personnel pour signer électroniquement les transactions mais uniquement un équipement et/ou un secret lui permettant de générer des codes d'authentification unique en réponse à un défi.

Des buts de l'invention sont réalisés par le procédé selon la revendication 1.

Dans la présente invention, un procédé de sécurisation d'une transaction électronique comprend la génération d'un défi personnel par un système d'authentification du système serveur sécurisé, attendant une réponse unique d'un utilisateur comme preuve de son identité, l'intégration du défi personnel et des données de la transaction sous forme d'un bitmap présentant des caractères lisibles par l'être humain, ces caractères n'étant pas compris dans les jeux de caractères informatiques formatés (c'est-à-dire suivant des protocoles informatiques d'écriture et de lecture, tels que le jeu de caractères ASCII), garantissant l'authenticité et l'intégrité des données qu'il contient pour l'utilisateur, et l'association de la réponse au défi avec le défi et la transaction.

Selon une forme d'exécution préférée, les caractères définissant le défi et des données de la transaction sont intégrés dans une ou plusieurs images, par exemple une photographie. L'intégration du défi et des données de la transaction dans une image comprenant une photo ou une autre image et qui peut être exprimée sous forme de Bitmap, notamment où les lettres et les chiffres alphanumériques lisibles par l'être humain ne sont pas des caractères générés et transmis selon un protocole connu, rend les données très difficilement lisibles, voire illisibles par une machine et ne peuvent donc pas être manipulés à la volée par un Troyen ou autre programme installé sur le poste de l'utilisateur sans que ce dernier s'en aperçoive.

Une image unique ou personnelle communiquée ou choisie de manière confidentielle, antérieurement à la transaction, et tramée avec des détails de la transaction et/ou du défi permet d'augmenter la sécurité, notamment pour prévenir la génération frauduleuse d'un reçu. Le reçu peut en plus être sécurisé par une signature digitale contenant les détails de la transaction et/ou du défi.

Le reçu est de préférence généré dans un format de document, par exemple de type PDF, permettant la visualisation du contenu et la validation de la signature dans un logiciel navigateur conventionnel, ainsi que la conservation du reçu dans un format pérenne d'archivage.

Ainsi, le procédé selon l'invention permet de lier la transaction indissociablement à la réponse au défi, c'est-à-dire à la confirmation de la transaction, d'un serveur sécurisé jusqu'aux yeux d'un utilisateur, en utilisant un seul canal de communication. L'invention permet d'utiliser un seul appareil électronique, tel qu'un ordinateur, et un seul canal de communication notamment un réseau ouvert tel que l'Internet, pour effectuer et signer une transaction électronique d'une manière sécurisée et générant un reçu non répudiable de la transaction qui en plus peut être stocké et/ou imprimé par l'utilisateur en gardant une valeur de preuve de la transaction.

L'invention permet de générer, au moyen du reçu, une preuve non répudiable de la transaction en fournissant une infrastructure à clé publique (PKI) centralisée contenant des clés privées et des certificats des utilisateurs. La PKI est connectée de manière sécurisée à un moteur de génération des reçus n'acceptant de crypter un Hash du reçu avec la clé privée de l'utilisateur qu'en échange d'une réponse correcte au défi.

Selon une forme d'exécution de l'invention, un procédé de sécurisation de transactions électroniques entre un poste utilisateur muni d'un programme navigateur de réseau, et un système serveur sécurisé d'une ou plusieurs contreparties à la transaction, comprend les étapes de :

- soumission de l'ordre de transaction par l'utilisateur au système de serveur sécurisé ;

- génération d'un défi dans le système serveur sécurisé et association de ce défi à la transaction de telle sorte que la réponse au défi ne puisse plus être utilisée pour une autre transaction ;

- génération dans le système serveur sécurisé d'un reçu visualisable sur le poste utilisateur, intégrant de manière lisible par un être humain des données de la transaction ainsi qu'un défi indissociable de la transaction sous forme d'un bitmap présentant des caractères lisibles par l'être humain, ces caractères n'étant pas compris dans les jeux de caractères informatiques formatés ;

- envoi du reçu et d'un formulaire ou champ de réponse au défi au poste de l'utilisateur ; et

- vérification dans le système serveur sécurisé de la réponse au défi retournée par l'utilisateur.

On peut en outre effectuer une signature électronique du reçu dans le système serveur sécurisé pour lier définitivement le code à usage unique aux détails de la transaction :

L'utilisateur valide donc la transaction en envoyant la réponse au défi, qu'il obtient d'un équipement personnel, comme une carte à grille ou un calculateur, et/ou d'un secret personnel, comme une règle de lecture ou un code PIN.

La génération d'un reçu signé électroniquement, intégrant les données de la transaction et le défi dans un bitmap avec des caractères lisibles par l'être humain mais difficilement lisibles, voire illisibles par une machine du fait qu'il ne suit aucun protocole de jeu de caractères reconnu, empêche un intermédiaire, même installé sur le poste de l'utilisateur, de manipuler les données de la transaction sans invalider celle-ci. En effet, un intermédiaire ne pourra pas modifier ni substituer le reçu pour approbation sans que cela ne puisse être détecté par l'utilisateur, ce dernier pouvant vérifier de visu le bitmap et la signature du reçu retourné. D'autre part, un programme intermédiaire ne pourra pas séparer le défi du reçu et donc des données de la transaction, permettant ainsi à la contrepartie de s'assurer que la réponse de l'utilisateur au défi correspond effectivement à son approbation de la transaction demandée.

L'intégration de données lisibles dans l'image peut être effectuée en tramant l'image avec des informations sur la transaction et le défi, ou encore sur l'utilisateur pour permettre le contrôle visuel de l'authenticité du reçu. L'utilisation d'image personnelle et confidentielle qui n'est pas échangée au moment de la transaction, comme une photo d'identité, complique de manière notoire la substitution ou l'altération du reçu par tout intermédiaire, humain ou programme. Pour créer une image tramée il est effectivement nécessaire de posséder l'image originale.

Le système informatique pour la mise en oeuvre du procédé selon l'invention, comprend, sous forme logicielle et/ou matérielle, une application apte à présenter un processus métier à l'utilisateur dans une série de pages et de formulaires Web, un moteur défi-réponse apte à générer des défis personnels et à valider les réponses, un moteur de contrôle visuel apte à implémenter la génération des contrôles d'intégrité visuel, une PKI apte à signer électroniquement le reçu, et un moteur de reçu communiquant avec les moteurs et applications précités et apte à générer des reçus comprenant des détails de la transaction et du défi.

D'autres buts et caractéristiques avantageuses de l'invention ressortiront des revendications, de la description détaillée et des dessins annexés, dans lesquels:

- la Fig. 1 est un diagramme de séquence démontrant la nécessité de lier les détails de la transaction au code d'authentification à usage unique dans le but de protéger une transaction contre un intermédiaire malveillant ;

- la Fig. 2 est un diagramme de séquence démontrant la nécessité de lier les détails de la transaction au code d'authentification à usage unique même lorsqu'un reçu avec les détails de la transaction peut être affiché de manière sécurisée à l'utilisateur ;

- la Fig. 3 est un diagramme de séquence présentant la parade consistant à générer le code à usage unique à partir des détails de la transaction à l'aide d'un calculateur ;

- la Fig. 4 est un diagramme de séquence présentant la parade consistant à envoyer le code à usage unique avec les détails de la transaction par un canal distinct ;

- la Fig. 5 est un diagramme de séquence illustrant le principe de l'invention, à savoir l'association définitive entre les détails de la transaction et le défi à usage unique fournit par un système d'authentification basé défi-réponse ;

- la Fig. 6 est un diagramme de séquence illustrant la parade mise en oeuvre avec l'invention ;

- la Fig. 7 est un diagramme illustrant les étapes de validation d'une transaction selon un exemple de l'invention;

- Les Fig. 8a, 8b et 8c sont des illustrations des étapes de saisie et de validation d'un exemple de transaction bancaire telle que vue par l'utilisateur sur son écran d'ordinateur, la figure 8a illustrant la saisie des données de la transaction par l'utilisateur, la figure 8b illustrant la saisie de la réponse au défi, l'utilisateur se référant à une carte de codes, et la figure 8c illustrant le reçu de la transaction apparaissant sur l'écran de l'utilisateur ;

- Les figures 8d et 8e sont des illustrations recto, respectivement verso, d'une carte à codes utilisée pour l'exemple illustré dans les figures 8a-8c;

- La figure 8f est une vue d'une image du reçu sécurisé intégrant les données de la transaction et le défi de l'exemple des figures 8a-8c ;

- La Fig. 9 est un diagramme illustrant les composants techniques à mettre en oeuvre ainsi que leurs interactions pour implémenter une forme d'exécution de l'invention ;

- La Fig. 10 est un diagramme de séquence détaillant les interactions entre le composant générant le reçu et le système d'authentification basé défi-réponse pour associer la réponse unique à la bonne transaction et au bon défi ;

- La Fig. 11 est un diagramme illustrant les composants techniques à mettre en oeuvre ainsi que leurs interactions pour implémenter la génération d'un reçu non répudiable selon une forme d'exécution de l'invention ;

- La Figure 12 est une illustration d'une autre forme d'exécution concernant l'intégration des données de la transaction et du défi dans l'image du reçu, l'intégration étant effectuée par moirage et l'utilisateur étant muni d'un révélateur sous forme d'un transparent qu'il peut superposer sur l'image apparaissant sur l'écran afin d'en faire ressortir de manière lisible le défi et/ou les détails de la transaction.

Dans les figures, les numéros entre parenthèses indiquent simplement la séquence des événements illustrés dans la figure respective et ne sont pas à confondre avec les numéros de référence sans parenthèses.

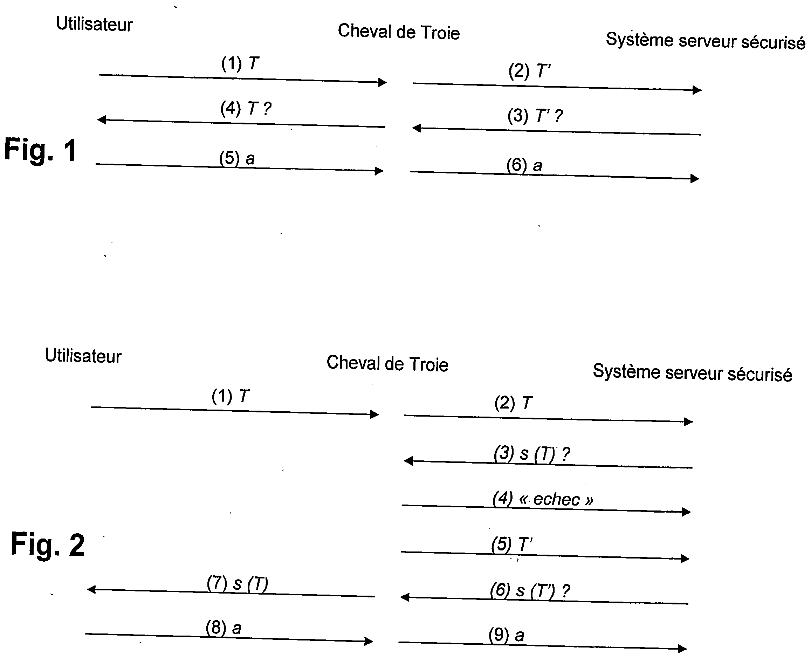

Le procédé classique de signature de transaction électronique, où le code à usage unique n'est pas lié aux détails de la transaction, ne protège pas contre un Troyen qui manipule des données envoyées et affichées par le navigateur. La Fig. 1 détaille la vulnérabilité du procédé. Un utilisateur rentre les détails d'une transaction $T$ dans son navigateur (1). Le cheval de Troie intercepte $T$ et soumet sa propre transaction $T'$ au système serveur sécurisé (2). Le système serveur sécurisé retourne un reçu avec les détails de $T'$ pour approbation par l'utilisateur (3). Encore une fois, le cheval de Troie intercepte le reçu $T'$ et affiche à la place un reçu de $T$ dans le navigateur (4). Inconscient de la supercherie, l'utilisateur valide sa transaction $T$ avec un code à usage unique a (5). Le cheval de Troie peut réutiliser a pour $T'$, car a n'est pas lié à $T$ (6).

La Fig. 2 démontre que le problème n'est pas résolu si le reçu peut être protégé contre la modification. Dans ce cas, le Troyen n'a qu'à laisser passer la transaction $T$ (2), puis lorsqu'il reçoit la demande de confirmation avec le reçu sécurisé s (T) de $T$ (3) il annule $T$ (4) et soumet sa propre transaction $T'$ (5). Ayant conservé le reçu s (T), il peut afficher ce reçu à l'utilisateur dans le navigateur (7) avant ou après avoir obtenu le reçu s (T') à confirmer pour $T'$ (6). L'utilisateur est toujours inconscient de la supercherie et le code d'approbation a qu'il rentre dans son navigateur (8) est en fait utilisé par le cheval de Troie pour confirmer la transaction $T'$ (9).

La vulnérabilité présentée dans la Fig. 1 et la Fig. 2 vient de la dissociation entre les détails de la transaction $T$ et le code d'authentification à usage unique a.

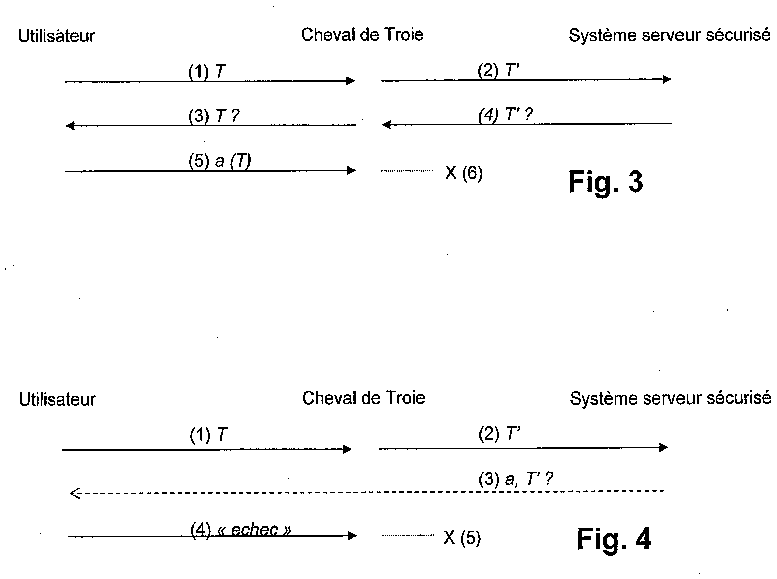

Seules des solutions capables de définitivement lier $T$ à a sont susceptibles de résoudre le problème. La Fig. 3 illustre la solution consistant à générer le code à usage unique à partir des détails de la transaction. Remplacer $T$ par $T'$ (étapes 1 à 4) n'est plus d'aucune utilité dans cette solution car le code a (T) généré par l'utilisateur à partir de $T$ ne peut plus être associé à $T'$. Il faut toutefois s'assurer que ce que l'utilisateur voit (T) et signe avec a(T) est effectivement reçu et respectivement transmis

La Fig. 4 illustre une solution consistant à envoyer les détails de la transaction avec le code à usage unique par un canal distinct. Dans ce cas, le cheval de Troie n'est plus capable d'intercepter le reçu et donc, le remplacement de $T$ par $T'$ (1 et 2) sera visible pour l'utilisateur (3) qui n'aura plus qu'à annuler la transaction (4). Néanmoins, cette solution est désavantageuse car elle nécessite un deuxième appareil, tel qu'un téléphone portable, avec les désavantages décrits plus tôt, en plus d'un premier appareil tel qu'un ordinateur pour effectuer la transaction.

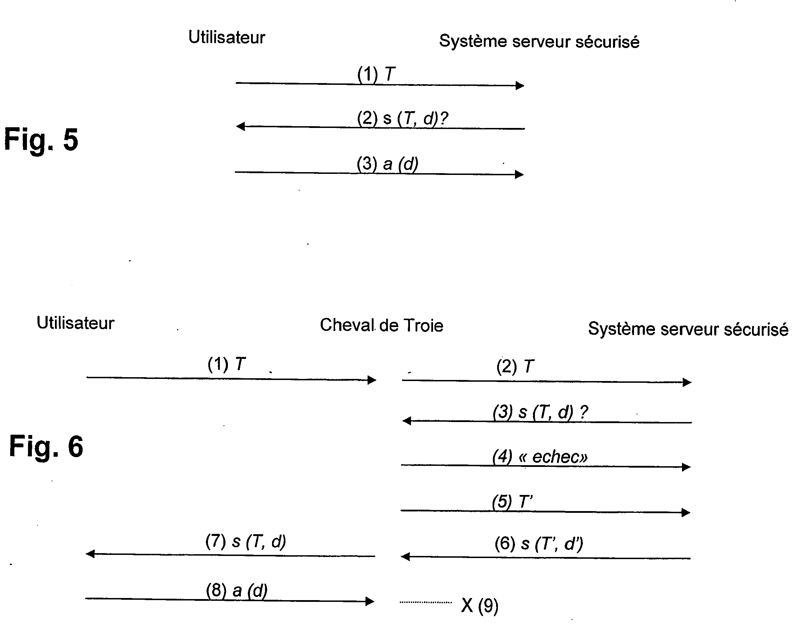

La Fig. 5 montre comment l'invention tire avantage des systèmes d'authentification basés défi-réponse pour associer de manière définitive le code d'authentification à usage unique aux détails de la transaction. Le principe consiste à générer un reçu qui lie définitivement les détails de la transaction à un défi, lui-même lié par le mécanisme de défi-réponse de manière unique à une réponse donnant le code à usage unique. L'utilisateur soumet les détails de sa transaction $T$ (1). Le système serveur sécurisé lui retourne un reçu sécurisé avec les détails de la transaction $T$ et le défi $d$ à résoudre en guise d'approbation (2). L'utilisateur approuve avec la réponse unique au défi a $(d)$ (3). Comme d est définitivement lié à $T$ par s $(T, d)$ et pour autant que a $(d)$ soit unique, a $(d)$ est définitivement lié à $T$.

La Fig. 6 montre comment le fait d'avoir inclus le défi dans le reçu sécurisé protège du détournement par Troyen réalisé à la manière de la Fig. 2. Le Troyen ne peut pas utiliser le défi d retourné dans un reçu sécurisé s $(T, d)$ par le serveur sécurisé pour la transaction légitime $T$ (1 à 3). S'il soumet sa propre transaction $T'$ (4 et 5), il recevra un nouveau défi $d'$ dans un reçu sécurisé s $(T, d')$ (6). Pour autant que la sécurité du reçu soit suffisante pour permettre à l'utilisateur d'en vérifier l'authenticité et l'intégrité, le Troyen ne peut pas afficher un faux reçu s' $(T, d')$ à l'utilisateur sans être démasqué. Il peut afficher aussi s $(T', d')$ mais sera à nouveau démasqué en révélant la forfaiture $T'$ à l'utilisateur. Il ne peut qu'afficher s $(T, d)$ (7) dont la réponse a $(d)$ (8) ne lui est cependant d'aucune utilité (9). Pour arriver à son but, le Troyen devrait afficher $s(T, d')$. Il ne le peut pas car il n'a pas l'image originale pour faire un faux reçu et il ne peut pas extraire le défi d' du reçu $s(T', d')$ dans un temps limité par la durée de validité du défi $d'$.

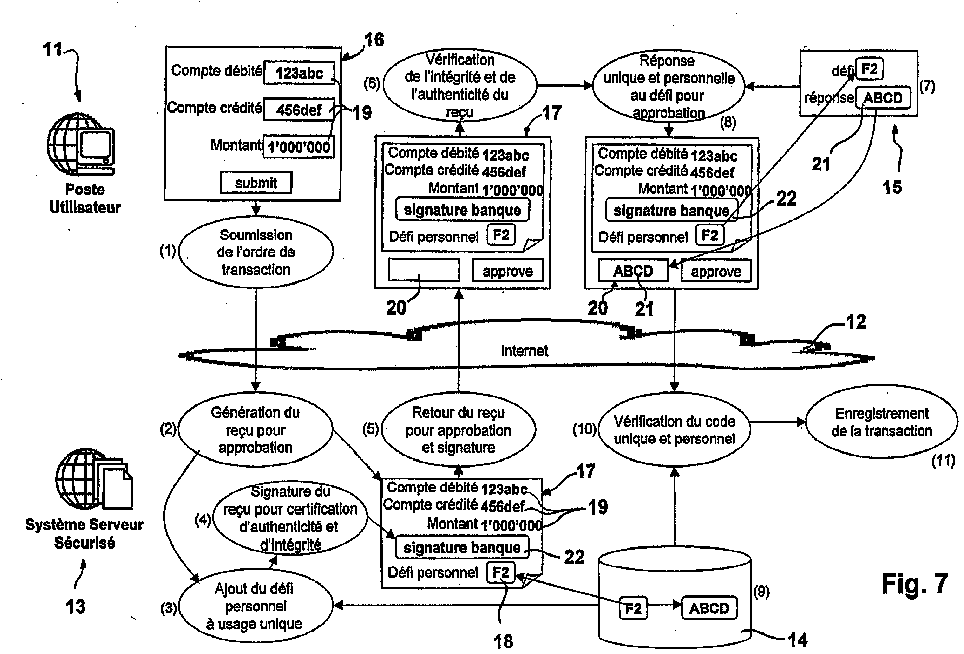

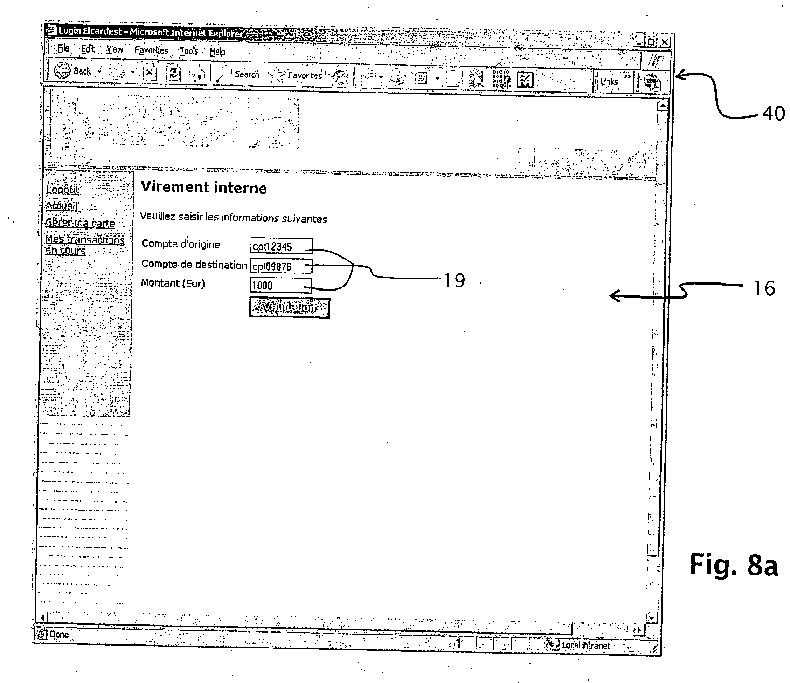

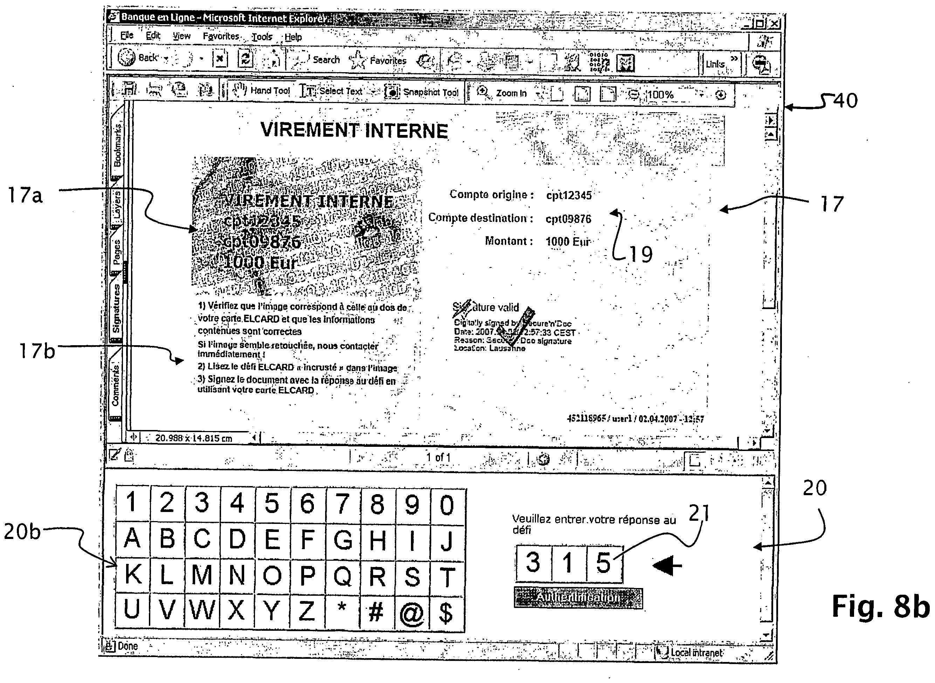

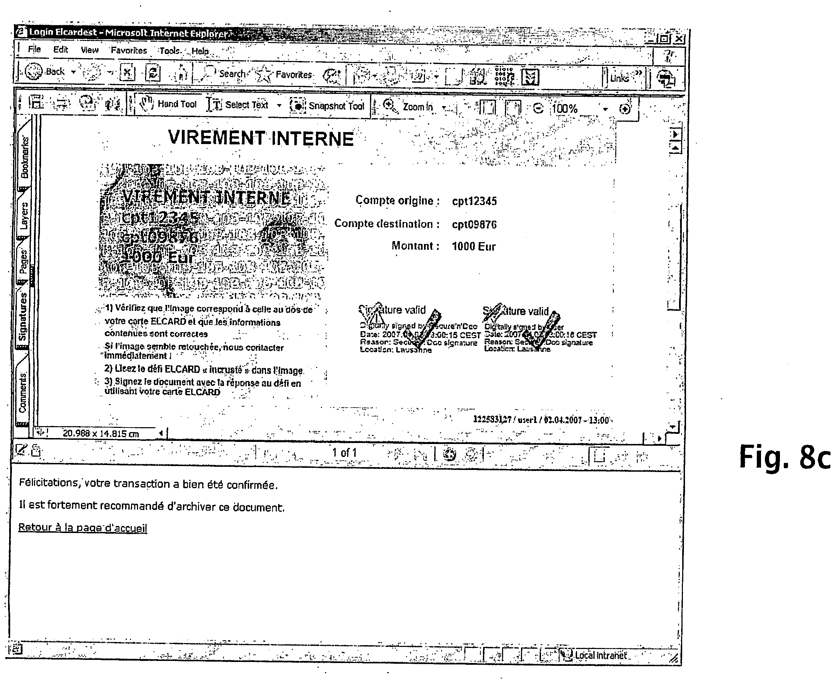

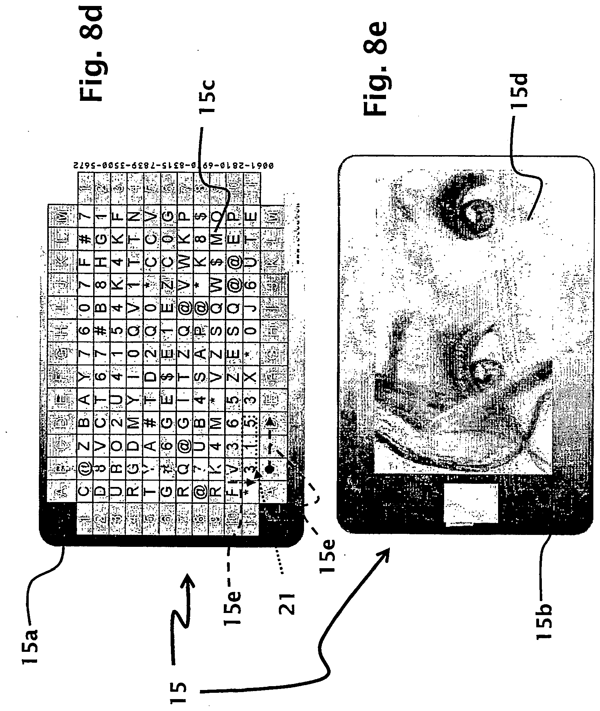

Les Fig. 7 et 8a à 8f illustrent les étapes d'un procédé selon l'invention pour effectuer un virement bancaire. Ce procédé est toutefois applicable à d'autres types de transactions où les données peuvent être résumées sur un formulaire tels que les ordres de vente et d'achat de biens ou de services, la confirmation de commandes ou l'établissement de contrats.

Un utilisateur muni d'un ordinateur ayant un logiciel de communication sur un réseau informatique, notamment un navigateur 40 pour la navigation sur Internet, formant un poste utilisateur 11, communique sur un réseau global ouvert 12 tel qu'Internet, avec un système serveur sécurisé 13. Par système serveur sécurisé, on entend une ou plusieurs machines serveurs protégées par des pare-feu et d'autres moyens de protection connus, sur un site ou distribués sur plusieurs sites. Le système serveur comprend un système d'authentification 14 qui génère des défis et valide des réponses. Le système serveur comprend en outre un système de génération de documents, par exemple de documents du type PDF, et un système d'insertion de contrôle d'intégrité visuelle telle qu'un programme pour la génération d'images tramées ou cryptées visuellement.

Les procédés de génération d'images tramées ou de cryptographie visuelle sont en soi connus dans le domaine de l'impression et décrits par exemple dans les documents WO 03/006257, EP 1554700, US 6249588 et US 5,488,864.

Le système serveur sécurisé comprend également un système de signature électronique de documents, basé sur une infrastructure à clé publique PKI (Public Key Infrastructure).

Le navigateur 40 du poste utilisateur peut être par exemple une version récente du navigateur Internet Explorer ™ de Microsoft, lui-même incluant d'autres logiciels tels que Acrobat Reader ™ de la société Adobe, permettant de visualiser les documents générés par le système serveur sécurisé et de vérifier leurs signatures électroniques.

L'utilisateur reçoit un générateur de réponses 15 sous forme d'un article personnel permettant de générer la réponse au défi, tel qu'une carte à grille ou un calculateur générant des codes électroniquement, les données permettant de valider les réponses aux défis étant également stockées dans le système serveur sécurisé.

Dans l'exemple d'une transaction bancaire effectuée via Internet illustrée dans la Fig. 7, l'utilisateur se connecte sur le site Internet de la banque, formant l'interface du système serveur sécurisé avec l'Internet. Le poste utilisateur peut être un PC doté d'un navigateur Internet, tel qu'Internet Explorer de Microsoft, muni d'un programme de lecture de documents PDF ou autre document pouvant être signé électroniquement.

L'utilisateur s'identifie auprès du site Internet de la banque avec des moyens d'authentification définis par la banque qui sont connus en soi.

Bien que cela ne soit pas nécessaire pour l'invention, on peut supposer que, comme pour tous les échanges entre un utilisateur et sa banque, les données échangées, à partir de l'authentification initiale de l'utilisateur, sont cryptées et protégées, par exemple en utilisant le mode de communication SSL (Secure Socket Layer).

Pour envoyer sa requête, l'utilisateur remplit un formulaire 16 à disposition sur le site Internet avec les données de la transaction 19 et envoie ensuite sa requête au site Internet de la banque. Alternativement, l'utilisateur peut envoyer un ordre de transaction sur un formulaire pré-rempli à disposition sur son poste.

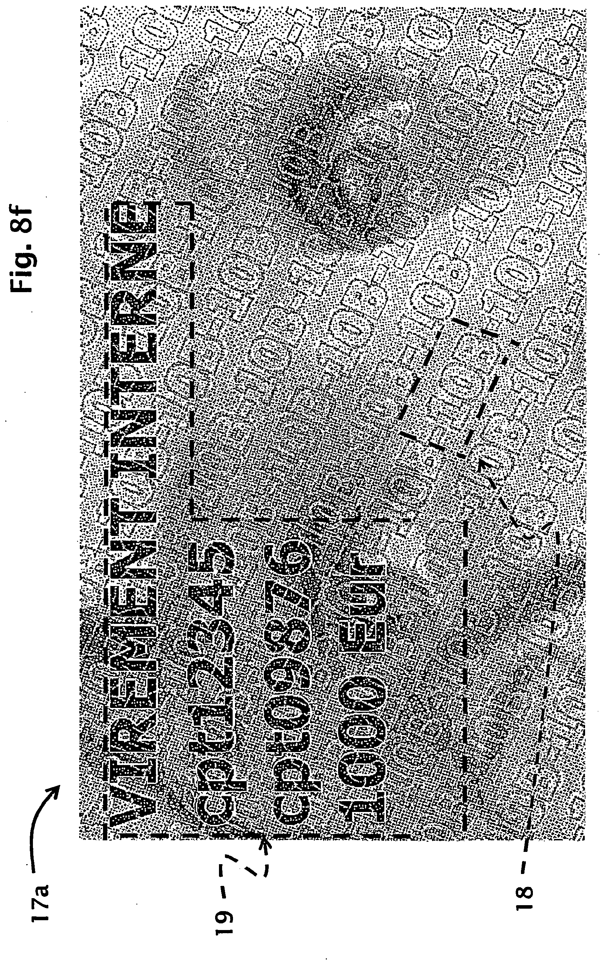

A la réception de l'ordre de transaction, le système serveur sécurisé génère un reçu 17 dans un format visualisable sur écran, résumant les données de la transaction 19 et comprenant un défi 18 (voir Fig. 8f) fourni par le serveur d'authentification 14.

Le reçu 17 est ensuite envoyé à l'utilisateur via la communication sécurisée établie entre l'utilisateur et le site Internet de la banque, et affiché dans le navigateur 40 de l'utilisateur accompagné d'un champ ou formulaire d'approbation 20.

La réponse 21 au défi est à usage unique et associée de manière définitive aux données de la transaction dans le serveur d'authentification. L'association entre la réponse au défi et les données de la transaction est réalisée par le biais du reçu 17. Le défi et les détails de la transaction incorporés dans une image 17a peuvent être vérifiés visuellement par l'utilisateur au moment de la transaction, empêchant toute manipulation du reçu par un intermédiaire. La signature électronique du reçu peut être vérifiée à postériori par l'utilisateur ou une partie tierce, empêchant toute altération du reçu archivé.

L'association entre le reçu et la réponse au défi est réalisée par le système serveur sécurisé et dépend du principe de fonctionnement du système d'authentification. Elle peut par exemple être accomplie en générant un code de transaction unique chiffré à partir des données du défi, et/ou de sa réponse, et/ou des données de la transaction telles que le montant, la date, le numéro de compte du débiteur et du bénéficiaire, le numéro de transaction. Cette clé de transaction peut être, de surcroît, chiffrée avec une clé partagée entre les différents composants du système serveur sécurisé.

Le reçu est de préférence généré dans un format du type PDF ou un autre format pérenne, répandu et vérifiable de manière indépendante par l'utilisateur. Il est signé électroniquement afin d'en garantir l'authenticité et l'intégrité ainsi que la possibilité de lecture par l'utilisateur sur son poste au moyen de son logiciel navigateur. La signature portant sur l'intégralité du document, elle garantit l'authenticité et l'intégrité des détails de la transaction ainsi que du défi personnel intégré. Cette signature peut par ailleurs former la clé de transaction unique décrite précédemment.

Le reçu comporte des contrôles d'intégrité visuels, tels qu'une partie d'image 17a tramée par microstructure, moirage, ou cryptographie visuelle, ces techniques de traitement de l'image étant connues en soi dans le domaine de l'impression de documents. Les données spécifiques à l'utilisateur, à la transaction et/ou au défi peuvent avantageusement être intégrées dans une image de fond 15d, telle qu'une photo, elle-même unique ou spécifique à l'utilisateur et stockée dans le système serveur sécurisé et transmise de manière séparée par l'utilisateur ou à l'utilisateur avant la transaction, afin de la rendre unique et difficilement falsifiable, tout en permettant un contrôle visuel très rapide par l'utilisateur.

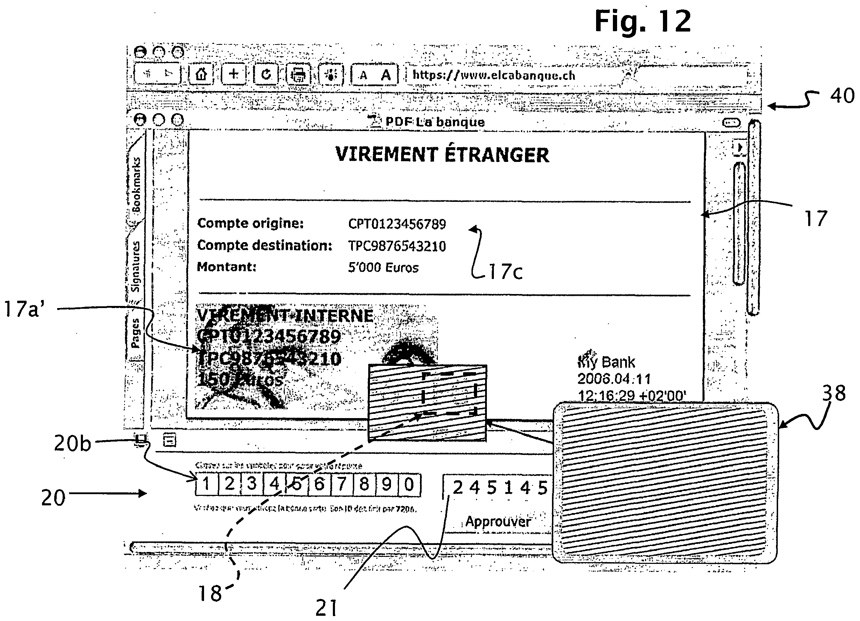

L'image de fond 15d peut être une photographie, un dessin ou un graphisme comprenant des contours non linéaires et de contrastes variables. Des données de la transaction et le défi sont intégrés de manière lisible à l'oeil nu par l'être humain, soit directement tel qu'affiché, soit en apposant un révélateur 38 sous forme de transparent sur la partie d'image (variante illustrée dans la figure 12). Les données affichées et leur format d'affichage (taille, fonte, orientation, séparateurs, ...) peuvent avantageusement varier dans le temps pour compliquer encore d'avantage la tâche d'un intermédiaire malveillant.

L'exemple illustré montre une seule partie d'image 17a, mais dans le cadre de l'invention il est possible de prévoir plusieurs parties d'image, chacune avec les mêmes données ou avec des données différentes. Certaines données intégrées dans l'image peuvent également être reproduites en texte clair ailleurs sur le reçu dans la partie 17c, afin d'augmenter la lisibilité de ces données. Le reçu peut comprendre en outre une partie d'instructions 17b indiquant à l'utilisateur les étapes de vérification du reçu qu'il devrait accomplir avant de donner son approbation.

Les données intégrées dans la ou les parties d'image 17a comprennent le défi, ainsi que les données relatives à la transaction, telles que le compte d'origine, le compte de destination et le montant de la transaction, ou simplement une partie des données de la transaction telles que le compte d'origine et le montant de la transaction ou bien le nom du bénéficiaire et le montant de la transaction. L'intégration du défi et des données de la transaction dans une image de sorte que ces données soient lisibles pour un être humain mais difficilement lisibles voire illisibles à la volée pour une machine, c'est-à-dire par des moyens électroniques, permet de créer une association entre la transaction, le défi et la réponse au défi indissociable et ne pouvant pas être manipulée par un programme malveillant ou par l'intervention d'un hacker dans le réseau de communication (sans être détecté), même si ce programme malveillant est sur le poste de l'utilisateur et intervient entre le navigateur et l'écran de l'utilisateur. La sécurité est encore augmentée si l'on utilise une image personnelle ou unique comme image de fond, associée à l'utilisateur et stockée dans le système serveur sécurisé. Cette image 15d peut être reproduite à titre d'aide-mémoire pour l'utilisateur, sur son générateur de code 15, tel que sur le dos d'une carte à grille telle qu'illustrée dans la figure 8e.

Dans la variante selon la figure 12, le défi n'est pas intégré dans la partie d'image 17a' directement visible pour l'oeil, l'utilisateur étant muni d'un révélateur 38 sous forme d'un transparent qu'il place sur la partie d'image apparaissant sur l'écran afin de révéler le défi 18 par effet de moirage. Les techniques du moirage sont en soi connues dans le domaine d'impression de billets de banque et d'autres documents de sécurité.

L'utilisateur doit ensuite parcourir le reçu visuellement et vérifier que les données de la transaction sont correctes, et que la partie d'image tramée comprend les données attendues (données de la transaction, du défi, et optionnellement des données personnelles) et, le cas échéant, que la signature électronique est valide et que le certificat digital associé (typiquement au format X509) est bien celui de la banque.

Si l'utilisateur approuve les données présentes sur le reçu, il donne son approbation à la transaction en entrant la réponse 21 au défi 18 se trouvant dans la partie d'image 17a dans le champ d'approbation 20 du reçu ou du formulaire. Le champ d'approbation peut avantageusement comprendre un clavier virtuel 20b pour faciliter la saisie de données de la réponse.

L'utilisateur génère la réponse au défi au moyen de son générateur de réponses personnel 15 qui peut être fourni sous forme d'une carte à grille 15 avec au recto 15a des colonnes et des lignes formant une matrice, ou encore sous forme d'un calculateur ou autre HSM. Dans l'exemple illustré, le défi "10B" indique la case, la colonne 10 et la ligne B de la carte à grille à partir desquelles l'utilisateur suit une règle de lecture 15e qu'il doit connaître, pour retrouver la réponse 21. Le dos 15b de la carte comprend avantageusement une image correspondant à l'image de fond de la partie d'image du reçu. Pour bénéficier des avantages de l'invention il n'est pas nécessaire d'utiliser une image personnelle ou unique, néanmoins comme expliqué auparavant cela permet d'augmenter la sécurité contre une tentative de reproduction frauduleuse d'un reçu.

La partie d'image dans laquelle sont intégrées les données indiquant le défi et les données de la transaction peuvent également prendre d'autres formes telles que la cryptographie visuelle nécessitant également un révélateur sous forme de transparent, la technique de cryptographie visuelle étant en soi déjà connue. Le défi et les données de la transaction peuvent aussi être générés et intégrés dans une image par d'autres transformations graphiques de sorte à ce que ces données ne soient pas transmises en tant que caractères formatés selon un jeu de caractères informatiques, mais en tant qu'image (Bitmap) illisibles sans recours à des logiciels de reconnaissance d'images et d'objets incrustés dans les images.

L'utilisateur approuve donc le reçu en soumettant sa réponse dans un formulaire d'approbation, ou en retournant le reçu avec le champ d'approbation, de sorte que la la transaction puisse être identifiée et la réponse au défi vérifiée par le système d'authentification du système sécurisé, ou par un autre serveur du système serveur sécurisé où les données de la transaction sont stockées.

Si la réponse au défi est correcte, la transaction est validée.

Ce procédé sécurise la transaction contre l'interception et la modification à la volée des données pour l'une ou plusieurs des raisons suivantes :

- les données de la transaction ne peuvent pas être modifiées sans que la forfaiture ne soit visible dans le reçu généré par le système serveur sécurisé,

- le reçu ne peut pas être modifié ou remplacé à la volée car son authenticité et son intégrité sont protégées par la signature électronique et/ou par des contrôles d'intégrité visuels,

- le reçu ne peut-être approuvé que par l'utilisateur qui a forcément visualisé le reçu et qui possède la réponse au défi,

- modifier la réponse au défi à la volée n'a aucun intérêt sauf de provoquer l'échec de la transaction,

- la réponse au défi étant unique et le défi étant indissociable du reçu, ils ne peuvent pas être réutilisés pour une autre transaction.

De plus, ce procédé peut facilement être étendu pour offrir une preuve non-répudiable de la transaction du fait que :

- le reçu retourné à l'utilisateur lui fournit déjà une preuve du contenu de la transaction car le reçu est signé par le système serveur sécurisé,

- une bonne réponse au défi est la preuve que l'utilisateur est le destinataire valide du reçu, qu'il a effectivement ouvert et regardé le document, et que ce dernier était lisible,

- la réponse au défi peut être utilisée pour authentifier l'utilisateur auprès d'une PKI centralisée et obtenir une contre-signature personnelle du reçu, la force de cette signature étant d'autant plus grande si elle est déclenchée par la validation de la réponse au défi par la PKI elle-même,

- le reçu signé par les deux parties offre une preuve non répudiable de la transaction visualisable et archivable par les deux parties.

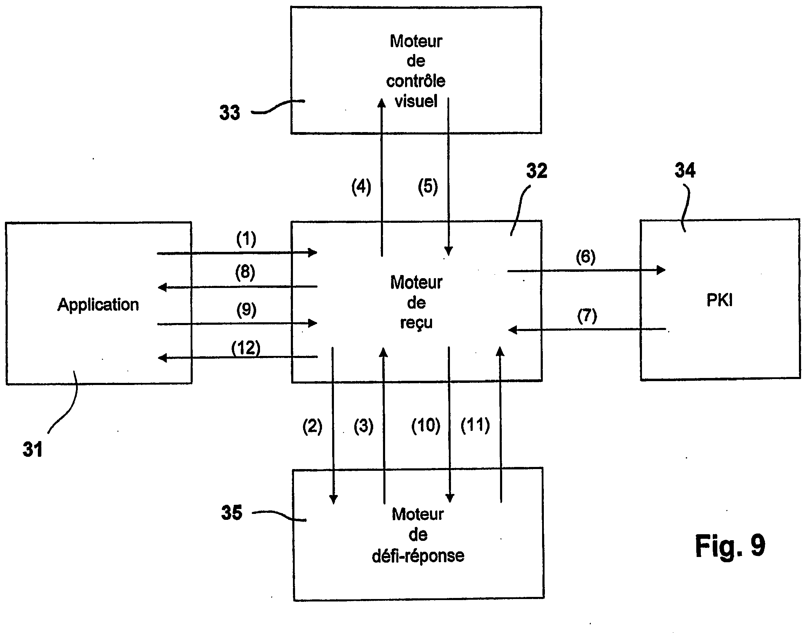

La Fig. 9 présente les différentes briques logicielles et/ou matérielles à assembler dans le but de sécuriser les transactions selon le procédé de génération de reçu de la présente invention.

L'Application 31 présente le processus métier à l'utilisateur dans une série de pages et de formulaires Web. Il s'agit par exemple de l'application de e-Banking de l'exemple illustré précédemment.

Le Moteur de reçu 32 est le composant central qui implémente la revendication de la présente invention, à savoir la génération et l'approbation du reçu.

Le Moteur de contrôle visuel 33 implémente la génération des contrôles d'intégrité visuel.

La PKI 34 désigne le conteneur logiciel ou matériel de la clé privée et du certificat utilisés pour signer électroniquement le reçu. Il peut s'agir d'un conteneur matériel, comme une clé USB ou une smart card, ou d'un « keystore » logiciel tel que celui inclus dans les versions récentes de MS Windows™.

Enfin, le Moteur de défi-réponse 35 est le composant qui génère les défis personnels envoyés à l'utilisateur et qui pilote la validation des réponses calculées par ce dernier à l'aide de son générateur mot de passe.

Les cinq composants sont supposés communiquer de manière sécurisée, de telle sorte que toute intrusion entre eux est proscrite. Une telle isolation peut être obtenue de différentes manières et, notamment, en isolant le réseau, en chiffrant les échanges, et/ou par authentification mutuelle des composants.

L'Application 31 reçoit les données de la transaction de l'Internaute. Elle émet la requête de génération du reçu en précisant les données de la transaction ainsi que l'identité de l'utilisateur (1).

Le Moteur de reçu 32 demande un défi - typiquement deux images indiquant une ligne et une colonne dans une carte à grille - au Moteur de défi-réponse 35 en précisant l'identité de l'utilisateur (2) et reçoit le défi en retour (3).

Si l'option « contrôle d'intégrité visuelle » est retenue, le Moteur de reçu 32 transmet les données (4) de la transaction et l'identité de l'utilisateur au Moteur de contrôle visuel 33 puis récupère en échange une ou plusieurs images personnelles, par exemple une photo d'identité précédemment fournie par l'utilisateur ou une image qui lui a été précédemment fournie, et tramée avec tout ou partie des données de la transaction et le défi (5).

Le Moteur de reçu 32 a alors tous les éléments pour générer la structure et le contenu du document. Sur cette base, il calcule un Hash (par exemple SHA-1) du document et le transmet pour chiffrement à la PKI, par exemple au travers d'une interface PKCS#7 ou MS CryptoAPI, avec les accréditations nécessaires telles que le PIN code protégeant la clé de signature (6). Ensuite, il crée la signature, par exemple un objet PKCS#7 pour encapsulation dans un document de type PDF.

Après que le Moteur de reçu 32 ait, le cas échéant, inséré la signature dans le document, il retourne le reçu à l'Application 31 avec un numéro de ticket unique, par exemple un dérivé du hash du document utilisé pour la signature (8). Ce ticket servira à identifier de la transaction de manière unique.

L'Application 31 conserve le ticket et transfert le reçu à l'utilisateur pour approbation. Lorsqu'elle reçoit en retour la réponse de l'Internaute, elle la transmet (9) avec le ticket et l'identifiant de l'Internaute au Moteur de reçu qui à son tour la soumet (10) au Moteur de défi-réponse 35 pour validation (11).

Pour terminer, le Moteur de reçu 32 retourne l'ordre de confirmer ou d'invalider la transaction (12) à l'Application 31.

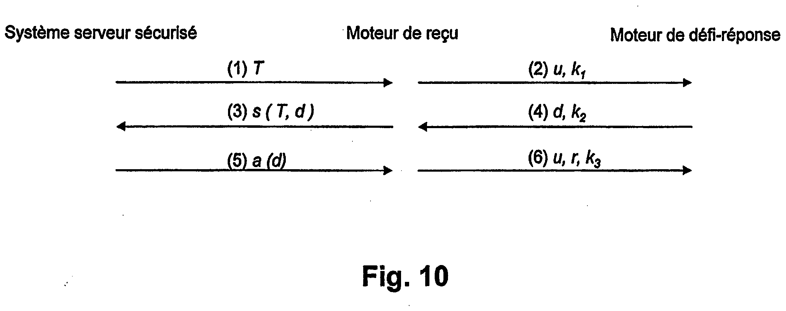

L'objectif est d'empêcher l'utilisation de la réponse au défi pour autre chose que la transaction voulue par l'utilisateur. La Fig. 10 présente les différentes manières d'assurer que la réponse au défi valide effectivement et uniquement la transaction liée au dit défi. L'usage correct de la réponse au défi est garanti par le Moteur de reçu qui gère le lien entre la transaction et le défi. Le Moteur de reçu peut créer une clé unique $k_1$ (2) lorsqu'il reçoit les détails de la transaction $T$ (1), lier la transaction à une clé unique $k_2$ retournée par le Moteur de défi-réponse en même temps que le défi (4), et/ou indiquer au Moteur de défi-réponse par une clé unique $k_3$ le défi auquel correspond la réponse qu'il lui transmet (6). L'utilisation de $k_1$ et/ou $k_2$ et/ou $k_3$ dépend du fonctionnement du Moteur de défi-réponse.

## Cas 1 : $k_1 = k_2 = k_3 = \varnothing$

Il n'est pas nécessaire de gérer explicitement la relation entre la transaction, le défi et sa réponse si les défis et les réponses pour un utilisateur donné sont générés séquentiellement sans risque qu'un autre défi puisse être demandé ou, une réponse proposée, en parallèle par un autre composant que le Moteur de reçu. Dans ce cas la réponse correspond forcément au dernier défi et à la transaction en cours pour l'utilisateur.

## Cas 2 : $k_1 = k_2 = \varnothing$ & $k_3 = k \, (d)$

Une autre manière de lier la réponse, le défi et la transaction repose sur l'hypothèse que le Moteur de défi-réponse valide un couple {défi, réponse} et non la réponse seule.

## Cas 3 : $k_1 = \varnothing$ & $k_2 = k_3 = f \, (d)$

Plutôt que d'utiliser le défi, il est aussi envisageable de tirer partie, le cas échéant, d'une clé de requête que serait capable de fournir le Moteur de défi-réponse en même temps que le défi.

## Cas 4 : $k_1 = k_3 = f \, (T)$

Enfin, la clé réconciliant transaction, défi et réponse peut être calculée par le Moteur de reçu comme une fonction des données de la transaction, puis communiquée au Moteur de défi-réponse avec la demande de défi. Ce procédé nécessite que le Moteur de défi-réponse accepte d'enregistrer une clé de requête communiquée par un système externe.

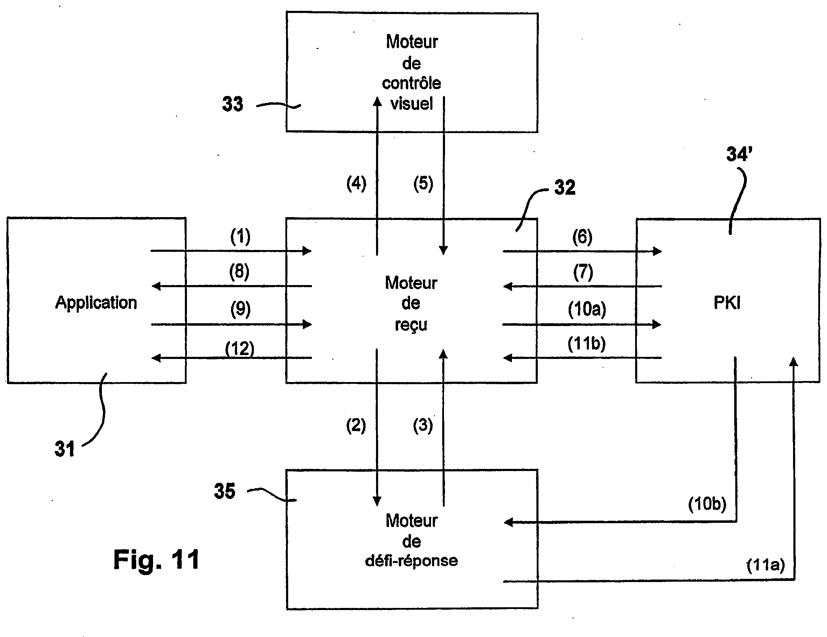

En étendant l'architecture à composants comme illustré en Fig. 11, il est possible, pour autant que la PKI 34' et le Moteur de défi-réponse 35 le permette, d'utiliser la réponse de l'utilisateur pour provoquer la signature électronique du reçu par l'utilisateur et fournir ainsi une preuve non-répudiable de la transaction pour les deux parties. Il suffit pour ce faire de disposer d'une PKI 34' centralisant les clés privées et les certificats des utilisateurs et n'autorisant leur utilisation qu'après une réponse correcte à un défi. Dés lors les étapes (10) et (11) sont modifiées comme suit. Le Moteur de reçu 33 transmet un Hash du reçu soumis à l'utilisateur - i.e., du reçu déjà signé avec la clé privée du fournisseur du système serveur sécurisé - ainsi que l'identité de l'utilisateur et sa réponse au défi en guise d'accréditation (10a). La PKI 34' soumet la réponse au défi au Moteur de défi-réponse 35 avec l'identité de l'utilisateur (10b). Sur approbation (11a) du Moteur de défi-réponse 35, la PKI 34' accepte de crypter le Hash du reçu avec la clé privée de l'utilisateur et retourne le résultat au Moteur de reçu 32. Le dit résultat contient donc les deux signatures du fournisseur et de l'utilisateur sans possibilité de contestation puisque seul le Moteur de reçu 32 en possession des bonnes accréditations a pu le générer.

## Revendications

**Revendications pour l'(les) Etat(s) contractant(s) suivant(s): AT, BE, CH, DE, DK, ES, FR, GR, IT, LI, LU, MC, NL, SE**

1. Procédé de génération d'un reçu sécurisé pour la sécurisation d'une transaction électronique comprenant :

   - la génération d'un défi personnel par un système d'authentification d'un système serveur sécurisé, attendant une réponse unique d'un utilisateur comme preuve de son identité ;
   - la génération d'un reçu sécurisé incluant un contrôle d'intégrité visuel comprenant l'intégration du défi personnel et des données de la transaction dans le reçu sous forme d'un bitmap présentant des caractères lisibles par l'être humain mais difficilement lisibles , voire illisibles par une machine ; et
   - l'association de la réponse au défi avec le défi et la transaction.

2. Procédé selon la revendication 1 **caractérisé en ce que** le défi et les données de la transaction sont intégrés dans une ou plusieurs images du reçu.

3. Procédé selon la revendication 2 **caractérisé en ce que** le contrôle d'intégrité visuel comprend une image de fond personnelle tramée avec des détails de la transaction et du défi.

4. Procédé selon la revendication 3 **caractérisé en ce que** l'image de fond est stockée dans le système serveur sécurisé antérieurement à la transaction.

5. Procédé selon la revendication 1, 2, 3 ou 4 **caractérisé en ce que** le reçu est sécurisé en outre par une signature digitale protégeant l'intégrité des détails de la transaction et du défi.

6. Procédé selon l'une quelconque des revendications précédentes **caractérisé en ce que** le reçu est généré dans un format de document vérifiable par l'utilisateur de manière indépendante et archivable dans un format pérenne, tel qu'un format PDF.

7. Procédé selon l'une quelconque des revendications précédentes **caractérisé en ce que** la réponse au défi est générée indépendamment des données de la transaction au moyen d'un générateur de code personnel fourni à l'utilisateur.

8. Procédé selon l'une quelconque des revendications précédentes, **caractérisé en ce que** la réponse au défi est générée au moyen d'un générateur de code personnel fourni à l'utilisateur, comprenant une représentation une l'image correspondant à l'image du reçu dans lequel le défi et les données de transaction sont intégrés.

9. Procédé selon l'une quelconque des revendications précédentes **caractérisé en ce que** l'on génère au moyen du reçu une preuve non répudiable de la transaction en fournissant une infrastructure à clé publique (PKI) centralisée contenant des clés privées et des certificats des utilisateurs, la PKI étant connectée de manière sécurisée a un moteur de génération des reçus n'acceptant de crypter un Hash du reçu avec la clé privée de l'utilisateur qu'en échange d'une réponse correcte au défi contenu dans le reçu.

10. Procédé de sécurisation d'une transaction électronique sur un réseau ouvert tel que l'Internet, entre un poste utilisateur muni d'un logiciel navigateur de réseau et un système serveur sécurisé, comprenant :

    - la génération d'un ordre de transaction sur le poste utilisateur et la soumission de l'ordre au système serveur sécurisé ;
    - la génération d'un reçu sécurisé par un procédé selon l'une quelconque des revendications précédentes ;
    - l'envoi du reçu au poste de l'utilisateur sous une forme visualisable sur le poste utilisateur et d'un formulaire ou champ de réponse au défi; et
    - la vérification dans le système serveur sécurisé de la réponse au défi retournée par l'utilisateur.

11. Système informatique pour la mise en oeuvre du procédé selon l'une quelconque des revendications précédentes, comprenant, dans une partie de réseau ou un serveur sécurisés,

    - une application (31) apte à présenter un processus métier à l'utilisateur dans une série de pages et de formulaires Web ;
    - un moteur défi-réponse (35) apte à générer des défis personnels et à valider les réponses ;
    - un moteur de contrôle visuel (33) apte à implémenter la génération des contrôles d'intégrité visuel comprenant l'intégration, dans un reçu, du défi personnel et des données d'une transaction associée sous forme d'un bitmap présentant des caractères lisibles par l'être humain mais difficilement lisibles , voire illisibles par une machine ;

- un moteur de reçu (32) communiquant avec les moteurs et application précités et apte à générer des reçus comprenant et liant des détails de la transaction et le défi.

**Revendications pour l'(les) Etat(s) contractant(s) suivant(s): GB**

1. Procédé de génération d'un reçu sécurisé pour la sécurisation d'une transaction électronique comprenant :

   - la génération d'un défi personnel par un système d'authentification d'un système serveur sécurisé, attendant une réponse unique d'un utilisateur comme preuve de son identité ;
   - la génération d'un reçu sécurisé incluant un contrôle d'intégrité visuel comprenant l'intégration du défi personnel et des données de la transaction dans le reçu sous forme d'un bitmap présentant des caractères lisibles par l'être humain mais difficilement lisibles, voire illisibles par une machine, le contrôle d'intégrité visuel comprenant une image de fond personnelle tramée avec des détails de la transaction et du défi;
   - l'association de la réponse au défi avec le défi et la transaction ; et
   - au moyen du reçu, la génération d'une preuve non répudiable de la transaction en fournissant une infrastructure à clé publique (PKI) centralisée contenant des clés privées et des certificats des utilisateurs, la PKI étant connectée de manière sécurisée a un moteur de génération des reçus n'acceptant de crypter un Hash du reçu avec la clé privée de l'utilisateur qu'en échange d'une réponse correcte au défi contenu dans le reçu.

2. Procédé selon la revendication 1 **caractérisé en ce que** le défi et les données de la transaction sont intégrés dans une ou plusieurs images du reçu.

3. Procédé selon la revendication 2 **caractérisé en ce que** l'image de fond est stockée dans le système serveur sécurisé antérieurement à la transaction.

4. Procédé selon la revendication 1, 2, ou 3 **caractérisé en ce que** le reçu est sécurisé en outre par une signature digitale protégeant l'intégrité des détails de la transaction et du défi.

5. Procédé selon l'une quelconque des revendications précédentes **caractérisé en ce que** le reçu est généré dans un format de document vérifiable par l'utilisateur de manière indépendante et archivable dans un format pérenne, tel qu'un format PDF.

6. Procédé selon l'une quelconque des revendications précédentes **caractérisé en ce que** la réponse au défi est générée indépendamment des données de la transaction au moyen d'un générateur de code personnel fourni à l'utilisateur.

7. Procédé selon l'une quelconque des revendications précédentes, **caractérisé en ce que** la réponse au défi est générée au moyen d'un générateur de code personnel fourni à l'utilisateur, comprenant une représentation une l'image correspondant à l'image du reçu dans lequel le défi et les données de transaction sont intégrés.

8. Procédé de sécurisation d'une transaction électronique sur un réseau ouvert tel que l'Internet, entre un poste utilisateur muni d'un logiciel navigateur de réseau et un système serveur sécurisé, comprenant :

   - la génération d'un ordre de transaction sur le poste utilisateur et la soumission de l'ordre au système serveur sécurisé ;
   - la génération d'un reçu sécurisé par un procédé selon l'une quelconque des revendications précédentes ;
   - l'envoi du reçu au poste de l'utilisateur sous une forme visualisable sur le poste utilisateur et d'un formulaire ou champ de réponse au défi; et
   - la vérification dans le système serveur sécurisé de la réponse au défi retournée par l'utilisateur.

9. Système informatique pour la mise en oeuvre du procédé selon l'une quelconque des revendications précédentes, comprenant, dans une partie de réseau ou un serveur sécurisés,

   - une application (31) apte à présenter un processus métier à l'utilisateur dans une série de pages et de formulaires Web ;
   - un moteur défi-réponse (35) apte à générer des défis personnels et à valider les réponses ;
   - un moteur de contrôle visuel (33) apte à implémenter la génération des contrôles d'intégrité visuel comprenant l'intégration, dans un reçu, du défi personnel et des données d'une transaction associée sous forme d'un bitmap présentant des caractères lisibles par l'être humain mais difficilement lisibles, voire illisibles par une machine, le contrôle d'intégrité visuel comprenant une image de fond unique ou personnelle tramée avec des détails de la transaction et du défi ;
   - un moteur de reçu (32) communiquant avec les moteurs et application précités et apte à générer des reçus comprenant et liant des détails de la transaction et le défi;
   - une infrastructure à clé publique (PKI) centralisée contenant des clés privées et des certificats des utilisateurs, la PKI étant connectée de manière sécurisée au moteur de reçus et n'acceptant de crypter un Hash du reçu avec la clé privée de l'utilisateur qu'en échange d'une réponse correcte au défi contenu dans le reçu.

**Patentansprüche**

**Patentansprüche für folgende(n) Vertragsstaat(en): AT, BE, CH, DE, DK, ES, FR, GR, IT, LI, LU, MC, NL, SE**

1. Verfahren zum Erzeugen einer gesicherten Quittung zur Sicherung einer elektronischen Transaktion, umfassend:

   - das Erzeugen einer persönlichen Herausforderung durch ein Authentifizierungssystem eines gesicherten Serversystems in Erwartung einer einzigartigen Antwort eines Benutzers als Beweis seiner Identität;
   - das Erzeugen einer gesicherten Quittung, einschließend eine visuelle Integritätsüberprüfung, umfassend die Integration der persönlichen Herausforderung und der Transaktionsdaten in der Quittung in Form eines Bitmaps, aufweisend vom Menschen lesbare, aber von einer Maschine schwer lesbare, ja sogar von einer Maschine nicht lesbare Zeichen; und
   - das Zuordnen der Antwort auf die Herausforderung zu der Herausforderung und der Transaktion.

2. Verfahren nach Anspruch 1, **dadurch gekennzeichnet, dass** die Herausforderung und die Transaktionsdaten in einem oder mehreren Bildern der Quittung integriert sind.

3. Verfahren nach Anspruch 2, **dadurch gekennzeichnet, dass** die visuelle Integritätsüberprüfung ein mit Details der Transaktion und der Herausforderung gerastertes persönliches Hintergrundbild umfasst.

4. Verfahren nach Anspruch 3, **dadurch gekennzeichnet, dass** das Hintergrundbild in dem gesicherten Serversystem vor der Transaktion gespeichert wird.

5. Verfahren nach Anspruch 1, 2, 3 oder 4, **dadurch gekennzeichnet, dass** die Quittung ferner mit einer digitalen Unterschrift gesichert ist, die die Integrität der Details der Transaktion und der Herausforderung schützt.

6. Verfahren nach einem der vorangehenden Ansprüche, **dadurch gekennzeichnet, dass** die Quittung in einem vom Benutzer unabhängig überprüfbaren und in einem dauerhaften Format archivierbaren Dokumentenformat wie einem PDF-Format erzeugt wird.

7. Verfahren nach einem der vorangehenden Ansprüche, **dadurch gekennzeichnet, dass** die Antwort auf die Herausforderung unabhängig von den Transaktionsdaten mittels eines persönlichen, dem Benutzer bereitgestellten Codegenerators erzeugt wird.

8. Verfahren nach einem der vorangehenden Ansprüche, **dadurch gekennzeichnet, dass** die Antwort auf die Herausforderung mittels eines persönlichen, dem Benutzer bereitgestellten Codegenerators erzeugt wird, umfassend eine Darstellung eines Bildes, das dem Bild der Quittung entspricht, in welchem die Herausforderung und die Transaktionsdaten integriert sind.

9. Verfahren nach einem der vorangehenden Ansprüche, **dadurch gekennzeichnet, dass** mit Hilfe der Quittung ein nicht ablehnbarer Beweis der Transaktion durch Bereitstellung einer zentralisierten Infrastruktur mit öffentlichem Schlüssel (PKI) erzeugt wird, enthaltend private Schlüssel und Benutzerzertifikate, wobei die PKI gesichert mit einer Quittungserzeugungsmaschine verbunden ist, die die Verschlüsselung eines Hashs der Quittung mit dem privaten Schlüssel des Benutzers nur im Austausch gegen eine richtige Antwort auf die in der Quittung enthaltene Herausforderung genehmigt.

10. Verfahren zur Sicherung einer elektronischen Transaktion in einem offenen Netzwerk wie dem Internet zwischen einem Benutzerplatz, der mit einer Netzwerkbrowsersoftware ausgestattet ist, und einem gesicherten Serversystem, umfassend:

    - das Erzeugen eines Transaktionsbefehls am Benutzerplatz und das Anbieten des Befehls gegenüber dem gesicherten Serversystem;
    - das Erzeugen einer gesicherten Quittung mittels eines Verfahrens nach einem der vorangehenden Ansprüche;
    - das Versenden der Quittung an den Benutzerplatz in einer am Benutzerplatz visualisierbaren Form und eines Formulars oder Antwortfelds auf die Herausforderung; und
    - das Überprüfen in dem gesicherten Serversystem der vom Benutzer auf die Herausforderung zurückgeschickten Antwort.

11. Informatiksystem zur Umsetzung des Verfahrens nach einem der vorangehenden Ansprüche, umfassend, in einem gesicherten Teil des Netzwerks oder Server,

- eine Anwendung (31), die imstande ist, dem Benutzer in einer Reihe von Webseiten und -formularen einen Geschäftsprozess anzubieten;
- eine Herausforderung-Antwort-Maschine (35), die imstande ist, persönliche Herausforderungen zu erzeugen und die Antworten zu bewerten;
- eine visuelle Überprüfungsmaschine (33), die imstande ist, die Erzeugung der Überprüfungen der visuellen Integrität, umfassend die Integration in eine Quittung der persönlichen Herausforderung und der Daten einer zugeordneten Transaktion in Form eines Bitmaps, aufweisend vom Menschen lesbare, aber von einer Maschine schwer lesbare, ja sogar von einer Maschine nicht lesbare Zeichen, zu implementieren;
- eine Quittungsmaschine (32), die mit den vorgenannten Maschinen und der Anwendung kommuniziert und imstande ist, Quittungen zu erzeugen, die Details der Transaktion und die Herausforderung umfassen und verbinden.

**Patentansprüche für folgende(n) Vertragsstaat(en): GB**

1.  Verfahren zum Erzeugen einer gesicherten Quittung zur Sicherung einer elektronischen Transaktion, umfassend:

    - das Erzeugen einer persönlichen Herausforderung durch ein Authentifizierungssystem eines gesicherten Serversystems in Erwartung einer einzigartigen Antwort eines Benutzers als Beweis seiner Identität;
    - das Erzeugen einer gesicherten Quittung, einschließend eine visuelle Integritätsüberprüfung, umfassend die Integration der persönlichen Herausforderung und der Transaktionsdaten in der Quittung in Form eines Bitmaps, aufweisend vom Menschen lesbare, aber von einer Maschine schwer lesbare, ja sogar von einer Maschine nicht lesbare Zeichen, wobei die visuelle Integritätsüberprüfung ein mit Details der Transaktion und der Herausforderung gerastertes persönliches Hintergrundbild umfasst;
    - das Zuordnen der Antwort auf die Herausforderung zu der Herausforderung und der Transaktion; und
    - das Erzeugen, mit Hilfe der Quittung, eines nicht ablehnbaren Beweises der Transaktion durch Bereitstellung einer zentralisierten Infrastruktur mit öffentlichem Schlüssel (PKI), enthaltend private Schlüssel und Benutzerzertifikate, wobei die PKI mit einer Quittungserzeugungsmaschine gesichert verbunden ist, die die Verschlüsselung eines Hashs der Quittung mit dem privaten Schlüssel des Benutzers nur im Austausch gegen eine richtige Antwort auf die in der Quittung enthaltene Herausforderung genehmigt.

2.  Verfahren nach Anspruch 1, **dadurch gekennzeichnet, dass** die Herausforderung und die Transaktionsdaten in einem oder mehreren Bildern der Quittung integriert sind.

3.  Verfahren nach Anspruch 2, **dadurch gekennzeichnet, dass** das Hintergrundbild in dem gesicherten Serversystem vor der Transaktion gespeichert wird.

4.  Verfahren nach Anspruch 1, 2, oder 3, **dadurch gekennzeichnet, dass** die Quittung ferner mit einer digitalen Unterschrift gesichert ist, die die Integrität der Details der Transaktion und der Herausforderung schützt.

5.  Verfahren nach einem der vorangehenden Ansprüche, **dadurch gekennzeichnet, dass** die Quittung in einem vom Benutzer unabhängig überprüfbaren und in einem dauerhaften Format archivierbaren Dokumentenformat wie einem PDF-Format erzeugt wird.

6.  Verfahren nach einem der vorangehenden Ansprüche, **dadurch gekennzeichnet, dass** die Antwort auf die Herausforderung unabhängig von den Transaktionsdaten mittels eines persönlichen, dem Benutzer bereitgestellten Codegenerators erzeugt wird.

7.  Verfahren nach einem der vorangehenden Ansprüche, **dadurch gekennzeichnet, dass** die Antwort auf die Herausforderung mittels eines persönlichen, dem Benutzer bereitgestellten Codegenerators erzeugt wird, umfassend eine Darstellung eines Bildes, das dem Bild der Quittung entspricht, in welchem die Herausforderung und die Transaktionsdaten integriert sind.

8.  Verfahren zur Sicherung einer elektronischen Transaktion in einem offenen Netzwerk wie dem Internet zwischen einem Benutzerplatz, der mit einer Netzwerkbrowsersoftware ausgestattet ist, und einem gesicherten Serversystem, umfassend:

    - das Erzeugen eines Transaktionsbefehls am Benutzerplatz und das Anbieten des Befehls gegenüber dem gesicherten Serversystem;
    - das Erzeugen einer gesicherten Quittung mittels eines Verfahrens nach einem der vorangehenden Ansprüche;
    - das Versenden der Quittung an den Benutzerplatz in einer am Benutzerplatz visualisierbaren Form und eines Formulars oder Antwortfelds auf die Herausforderung; und

- das Überprüfen in dem gesicherten Serversystem der vom Benutzer auf die Herausforderung zurückgeschickten Antwort.

9. Informatiksystem zur Umsetzung des Verfahrens nach einem der vorangehenden Ansprüche, umfassend, in einem gesicherten Teil des Netzwerks oder Server,

- eine Anwendung (31), die imstande ist, dem Benutzers in einer Reihe von Webseiten und -formularen einen Geschäftsprozess anzubieten;
- eine Herausforderung-Antwort-Maschine (35), die imstande ist, persönliche Herausforderungen zu erzeugen und die Antworten zu bewerten;
- eine visuelle Überprüfungsmaschine (33), die imstande ist, die Erzeugung der Überprüfungen der visuellen Integrität, umfassend die Integration in eine Quittung der persönlichen Herausforderung und der Daten einer zugeordneten Transaktion in Form eines Bitmaps, aufweisend vom Menschen lesbare, aber von einer Maschine schwer lesbare, ja sogar von einer Maschine nicht lesbare Zeichen, zu implementieren, wobei die visuelle Integritätsüberprüfung ein mit Details der Transaktion und der Herausforderung gerastertes persönliches Hintergrundbild umfasst;
- eine Quittungsmaschine (32), die mit den vorgenannten Maschinen und Anwendung kommuniziert und imstande ist, Quittungen zu erzeugen, die Details der Transaktion und die Herausforderung umfassen und verbinden;
- eine zentralisierte Infrastruktur mit öffentlichem Schlüssel (PKI), die private Schlüssel und Benutzerzertifikate enthält, wobei die PKI mit der Quittungsmaschine gesichert verbunden ist, die die Verschlüsselung eines Hashs der Quittung mit dem privaten Schlüssel des Benutzers nur im Austausch gegen eine richtige Antwort auf die in der Quittung enthaltene Herausforderung genehmigt.

**Claims**

**Claims for the following Contracting State(s): AT, BE, CH, DE, DK, ES, FR, GR, IT, LI, LU, MC, NL, SE**

1. A method for generating a secure receipt for securing an electronic transaction, comprising:

- generating a personal challenge via an authentication system of a secure server system, awaiting a unique response from a user as proof of user identity;
- generating a secure receipt including visual integrity control comprising integration of the personal challenge and of the transaction data in the receipt in the form of a bitmap having characters legible by a human being but scarcely legible, or illegible, by a machine; and
- associating the response to the challenge with the challenge and the transaction.

2. The method according to claim 1, **characterized in that** the challenge and the transaction data are integrated in one or more images of the receipt.

3. The method according to claim 2, **characterized in that** visual integrity control comprises a personal background image rasterized with details of the transaction and of the challenge.

4. The method according to claim 3, **characterized in that** the background image is stored in the secure server system prior to the transaction.

5. The method according to claim 1, 2, 3 or 4, **characterized in that** the receipt is further secured by a digital signature protecting the integrity of the details of the transaction and of the challenge.

6. The method according to any one of the preceding claims, **characterized in that** the receipt is generated in a document format verifiable by the user in an independent manner and is archivable in a sustainable format, such as PDF format.

7. The method according to any one of the preceding claims, **characterized in that** the response to the challenge is generated independently of the transaction data by means of a personal code generator supplied to the user.

8. The method according to any one of the preceding claims, **characterized in that** the response to the challenge is generated by means of a personal code generator supplied to the user, comprising a representation of an image corresponding to the image of the receipt in which the challenge and transaction data are integrated.

9. The method according to any one of the preceding claims, **characterized in that** irrefutable proof of the transaction is generated by means of the receipt by providing a centralised public key infrastructure (PKI) containing private keys and user certificates, the PKI being connected in secure manner to a receipt-generating engine only accepting to encrypt a Hash of the receipt with the private key of the user in exchange for a correct response to the challenge contained in the receipt.

**10.** A method for securing an electronic transaction on an open network such as the Internet, between a user terminal provided with network navigation software and a secure server system, comprising:

- generating a transaction order on the user terminal and submission of the order to the secure server system;
- generating a secured receipt by a method according to any one of the preceding claims;
- sending of the receipt to the user terminal in a form that can be visualized on the user terminal, and of a form or response field to the challenge; and
- verifying, within the secure server system, of the response to the challenge returned by the user.

**11.** A computer system to implement the method according to any one of the preceding claims comprising, in a secure network portion or server:

- an application (31) able to offer a business process to the user in a series of Web pages and forms;
- a challenge-response engine (35) able to generate personal challenges and to validate responses;
- a visual control engine (33) able to implement the generation of the visual integrity controls comprising the integration, in a receipt, of the personal challenge and data of an associated transaction in the form of a bitmap having characters legible by a human being but scarcely legible, or illegible, by a machine;
- a receipt engine (32) communicating with the aforementioned engines and application, and capable of generating receipts comprising and linking details of the transaction with the challenge.

**Claims for the following Contracting State(s): GB**

**1.** A method for generating a secure receipt for securing an electronic transaction, comprising:

- generating a personal challenge via an authentication system of a secure server system, awaiting a unique response from a user as proof of user identity;
- generating a secure receipt including visual integrity control comprising integration of the personal challenge and of the transaction data in the receipt in the form of a bitmap having characters legible by a human being but scarcely legible, or illegible, by a machine, the visual integrity control comprising a personal background image rasterized with details of the transaction and of the challenge;
- associating the response to the challenge with the challenge and the transaction; and
- by means of the receipt, generating irrefutable proof of the transaction by providing a centralised public key infrastructure (PKI) containing private keys and user certificates, the PKI being connected in secure manner to a receipt-generating engine only accepting to encrypt a Hash of the receipt with the private key of the user in exchange for a correct response to the challenge contained in the receipt.

**2.** The method according to claim 1, **characterized in that** the challenge and the transaction data are integrated in one or more images of the receipt.

**3.** The method according to claim 2, **characterized in that** the background image is stored in the secure server system prior to the transaction.

**4.** The method according to claim 1, 2 or 3, **characterized in that** the receipt is further secured by a digital signature protecting the integrity of the details of the transaction and of the challenge.

**5.** The method according to any one of the preceding claims, **characterized in that** the receipt is generated in a document format verifiable by the user in an independent manner and is archivable in a sustainable format, such as PDF format.

**6.** The method according to any one of the preceding claims, **characterized in that** the response to the challenge is generated independently of the transaction data by means of a personal code generator supplied to the user.

**7.** The method according to any one of the preceding claims, **characterized in that** the response to the challenge is generated by means of a personal code generator supplied to the user, comprising a representation of an image corresponding to the image of the receipt in which the challenge and transaction data are integrated.

**8.** A method for securing an electronic transaction on an open network such as the Internet, between a user terminal provided with network navigation software and a secure server system, comprising:

- generating a transaction order on the user terminal and submission of the order to the secure server system;
- generating a secured receipt by a method according to any one of the preceding claims;
- sending of the receipt to the user terminal in a form that can be visualized on the user terminal, and of a form or response field to the challenge; and

- verifying, within the secure server system, of the response to the challenge returned by the user.

9. A computer system to implement the method according to any one of the preceding claims comprising, in a secure network portion or server:

- an application (31) able to offer a business process to the user in a series of Web pages and forms;
- a challenge-response engine (35) able to generate personal challenges and to validate responses;
- a visual control engine (33) able to implement the generation of the visual integrity controls comprising the integration, in a receipt, of the personal challenge and data of an associated transaction in the form of a bitmap having characters legible by a human being but scarcely legible, even illegible, by a machine, the visual integrity control comprising a unique or personal background image rasterized with details of the transaction and of the challenge;
- a receipt engine (32) communicating with the aforementioned engines and application, and capable of generating receipts comprising and linking details of the transaction with the challenge;
- a centralised public key infrastructure (PKI) containing private keys and user certificates, the PKI being connected in secure manner to the receipt engine and only accepting to encrypt a Hash of the receipt with the private key of the user in exchange for a correct response to the challenge contained in the receipt.

EP 2 005 379 B1

Utilisateur | Cheval de Troie | Système serveur sécurisé

(1) $T$  →

(2) $T'$  →

(4) $T$ ?  ←

(3) $T'$ ?  ←

**Fig. 1**

(5) $a$  →

(6) $a$  →

Utilisateur | Cheval de Troie | Système serveur sécurisé

(1) $T$  →

(2) $T$  →

(3) $s(T)$ ?  ←

(4) « echec »  →

**Fig. 2**

(5) $T'$  →

(7) $s(T)$  ←

(6) $s(T')$ ?  ←

(8) $a$  →

(9) $a$  →

EP 2 005 379 B1

Utilisateur                          Cheval de Troie                  Système serveur sécurisé

————————— (1) T ——————————▶        ————————— (2) T' ——————————▶

◀————————— (3) T ? —————————        ◀————————— (4) T' ? —————————

————————— (5) a (T) ————————▶       ············· X (6)            **Fig. 3**


Utilisateur                          Cheval de Troie                  Système serveur sécurisé

————————— (1) T ——————————▶        ————————— (2) T' ——————————▶

                                                              (3) a, T' ?
◀- - - - - - - - - - - - - - - - - - - - - - - - - - - - - - - - - - - - - - - - -

————————— (4) « echec » ————————▶   ············· X (5)           **Fig. 4**

EP 2 005 379 B1

Utilisateur                          Système serveur sécurisé

**Fig. 5**

(1) *T* →

← (2) s *(T, d)?*

(3) *a (d)* →

Utilisateur                  Cheval de Troie                  Système serveur sécurisé

(1) *T* →                    (2) *T* →

**Fig. 6**

← *(3) s (T, d) ?*

*(4) « echec»* →

*(5) T'* →

← (7) s *(T, d)*                    ← *(6) s (T', d')*

(8) *a (d)* →          ·········· X (9)

Fig. 7

EP 2 005 379 B1

Fig. 8a

Fig. 8b

EP 2 005 379 B1

Fig. 8c

Fig. 8d

Fig. 8e

**Fig. 8f**

EP 2 005 379 B1

Fig. 9

Système serveur sécurisé     Moteur de reçu     Moteur de défi-réponse

$(1)\ T$ →

$(2)\ u,\ k_1$ →

$(3)\ s\ (\ T,\ d\ )$ ←

$(4)\ d,\ k_2$ ←

$(5)\ a\ (d)$ →

$(6)\ u,\ r,\ k_3$ →

**Fig. 10**

**Fig. 11**

EP 2 005 379 B1

## Fig. 12

VIREMENT ÉTRANGER

Compte origine:      CPT0123456789
Compte destination:  TPC9876543210
Montant:             5'000 Euros

VIREMENT INTERNE
CPT0123456789
TPC9876543210
150 Euros

My Bank
2006.04.11
12:16:29 +02'00'

1 2 3 4 5 6 7 8 9 0    2 4 5 1 4 5

Approuver

EP 2 005 379 B1

## RÉFÉRENCES CITÉES DANS LA DESCRIPTION

**Documents brevets cités dans la description**

- US 2005075973 A
- US 2004059952 A
- EP 1338940 A
- US 2001044896 A
- US 5060263 A
- GB 2120434 A
- US 2005246524 A
- US 20050075973 A

- US 20020198848 A
- US 20020080183 A
- US 2003055738 A
- GB 2429094 A
- WO 03006257 A
- EP 1554700 A
- US 6249588 B
- US 5488864 A